# EUROPEAN PATENT SPECIFICATION

(11) **EP 2 944 832 B1**
(45) Date of publication and mention of the grant of the patent: **09.11.2016**
(21) Application number: 15001080.9
(22) Date of filing: 15.04.2015
(51) Int. Cl.: F16B 7/00, F16B 7/18

(54) **ASSEMBLING SYSTEM FOR SECTIONS**
MONTAGESYSTEM FÜR ABSCHNITTE
SYSTÈME D'ASSEMBLAGE POUR DES SECTIONS

(30) Priority: 24.04.2014 IT TO20140339
(43) Date of publication of application: 18.11.2015
(73) Proprietor: Alusic S.r.l., 12084 Mondovi' (IT)
(72) Inventor: Denegri, Carlo, I-12084 Mondovi' (CN) (IT)
(74) Representative: Garavelli, Paolo

(56) References cited:
- EP-A1- 1 593 861
- DE-A1- 10 012 729

## Description

The present invention refers to an assembling system for the connection of sections.

Right-angle connections are known for two or more sections obtained through known assembling techniques which do not require drilling, milling and welding interventions. The field of application is highly interesting and is continuously growing with the purpose of developing connection techniques and devices which allow reducing the assembly working times and simplifying the works.

A known assembling technique provides for a connection between sections with a tensioning bracket, in which a steel threaded insert is screwed in the centre of the section. Afterwards, the tensioning bracket equipped with a ring nut is inserted in the section and tightened, and a small block per groove is inserted into the section, which is then fastened to the tensioning bracket with two fastening screws, consequently joining the sections.

A connection technique for sections is also known, which is characterized by the use of flange-type gibs: in particular, in the technique, the fastening screws are directly inserted into the section to be connected; in fact, the threaded insert is absent with respect to the above described known technique.

It is clear how the above described techniques do not allow a quick and simple connections of the sections.

Connection devices of perpendicular profiled bars are known, which use connection flanges, through fastening screws which extend from the first rod to the second through holes obtained in the flange like those, for example, disclosed in US5171098, US5481842, US5746535, EP0233525, WO2009153273, the connection however resulting static and not quickly made. Alternatively or additionally, connection devices are known in which blocks sliding on a profiled bar are used, while the other bar is fastened to the sliding blocks through a flange and fastening screws the as those disclosed, for example, in US6712543, US5192145, DE3923578, DE4244396.

DE-A1-100 12 729 and EP-A1-1 593 861 disclose an assembling system according to the preamble of Claim 1.

Object of the present invention is solving the above prior art problems by providing an assembling system for sections adapted to simplify and optimize the right-angle coupling between sections.

The above and other objects and advantages of the invention, as will result from the following description, are obtained with an assembling system for sections as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non limiting example, with reference to the enclosed drawings, in which:
- Figure 1 shows a perspective view of a right-angle connection between two sections through the assembling system according to the present invention;
- Figures 2 to 6 shows perspective views of the components of the assembling system during an assembling procedure of the system according to the present invention; and

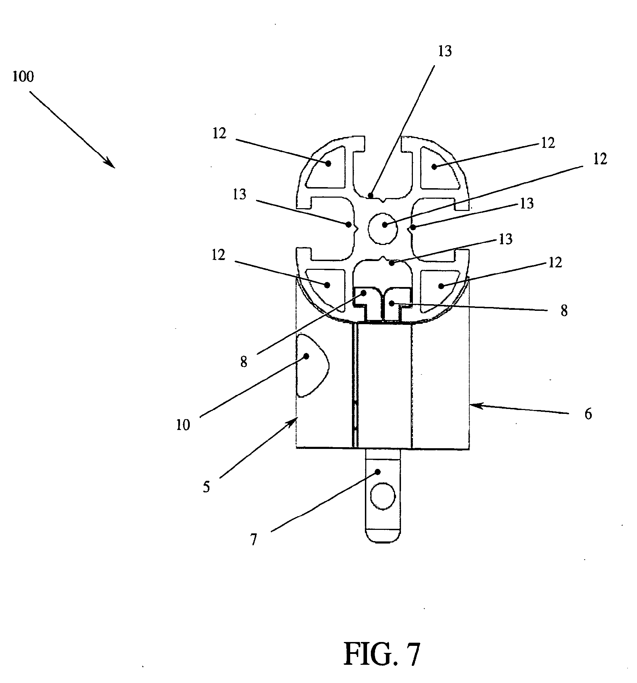

- Figure 7 shows a sectional view of a section of the assembling system according to the present invention.

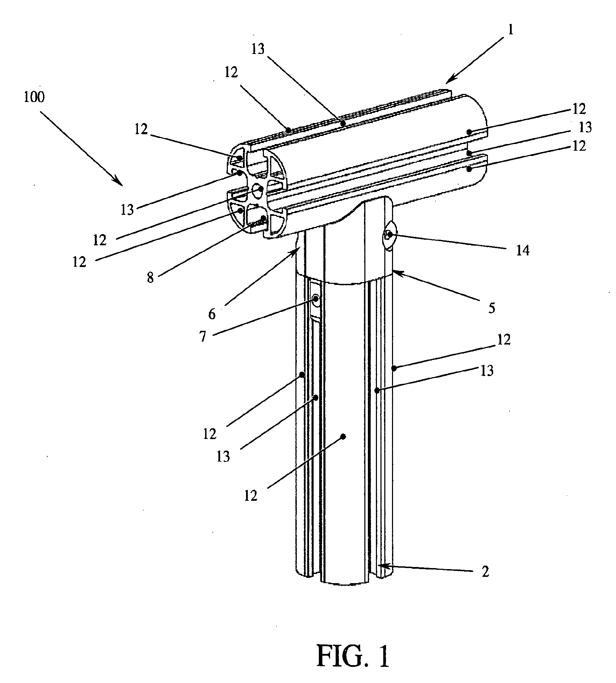

With reference to Figure 1, it is possible to note that the system 100 for assembling sections made of aluminium or other suitable material, according to the present invention, is adapted to mutually connect at least one first profiled element 1 and at least one second profiled element 2, arranged preferably perpendicular one with respect to the other, each of the profiled elements 1, 2 being equipped with at least one longitudinal groove 13.

In addition, as known in the art, it is possible to provide that the profiled elements 1, 2 are equipped with a plurality of hollows elements 12 arranged longitudinally to the profiled elements 1, 2, and in parallel with the respective groove 13.

The system 100 according to the present invention therefore comprises:
- at least one fastening pin 4 the as, for example, a self-threading screw or other suitable means, comprising a first portion 4a adapted to be connected to the second profiled element 2, for example being inserted along at least one axis of symmetry of the second profiled element 2 (preferably inside at least one hollow element 12 longitudinally centred on at least one end surface of the second profiled element 2), and at least one second portion going out of the end surface of the second profiled element 2 equipped with at least one connection head 4b;
- at least one connection element equipped with first connection means to at least one groove 13 of the first profiled element 1 and of second connection means to the connection head 4b of the fastening pin 4.

Advantageously, the connection element comprises at least one composable jaw composed of at least one first half-shell 5 and at least one second half-shell 6, which are mutually complementary, each of the half-shells 5, 6 being equipped with the first connection means at least to the groove 13 of the first profiled element 1 and of the second connection means to the connection head 4b of the fastening pin 4.

Preferably, in each of the half-shells 5, 6, the first connection means comprise at least one adhesion profile 8 arranged on an upper end of a respective the half-shell 5, 6, advantageously shaped as a hook, adapted to be inserted, and possibly to slide, in a the groove 13 of the first profiled element 1.

Moreover, in each of the half-shells 5, 6, the second connection means comprise at least one seat 11 arranged on an internal surface of a respective half-shell 5, 6, the seat 11 being adapted to house therein at least one portion of the connection head 4b of the fastening pin 4, ensuring stability to the connection between the profiled elements 1, 2.

In addition, it is possible to provide that at least one lower end of each of the half-shells 5, 6 is equipped with at least one appendix 7, such as for example, a square, prismatic, spherical pin, or other suitable one, adapted to be connected to a respective groove 13 of the second profiled element 2, through a snap connection, an elastic interference connection or other suitable one.

In particular, each of the half-shells 5, 6 is equipped with an upper surface 9 adapted to be matched with at least one portion of external surface of the first profiled element 1 and of a lower surface adapted to be matched with at least one portion of the end surface of the second profiled element 2.

The external surface of each of the half-shells 5, 6 can further be equipped with at least one first hole 10, advantageously chamfered, adapted to house at least one blocking screw 14, such as for example a chamfered head screw, or a self-threading screw, or other suitable means, and with at least one second hole 10a occupying, on the external surface, a diametrically opposite position to the first hole 10. The first hole 10 of the first half-shell 5 is adapted to be overlapped with the second hole 10a of the second half-shell 6 and, vice versa, the first hole 10 of the second half-shell 6 is adapted to be overlapped with the second hole 10a of the first half-shell 5.

In particular in the Figures, only as an example, a preferred embodiment is shown of the system 100 for assembling sections with a rounded, circularly sectioned profile, wherein the half-shells 5, 6 are equipped with a concave upper surface adapted to be matched with the rounded external surface of the first profiled element 1, with a curved lateral surface, and with a curved lower surface adapted to be matched with the end surface of the second section 2.

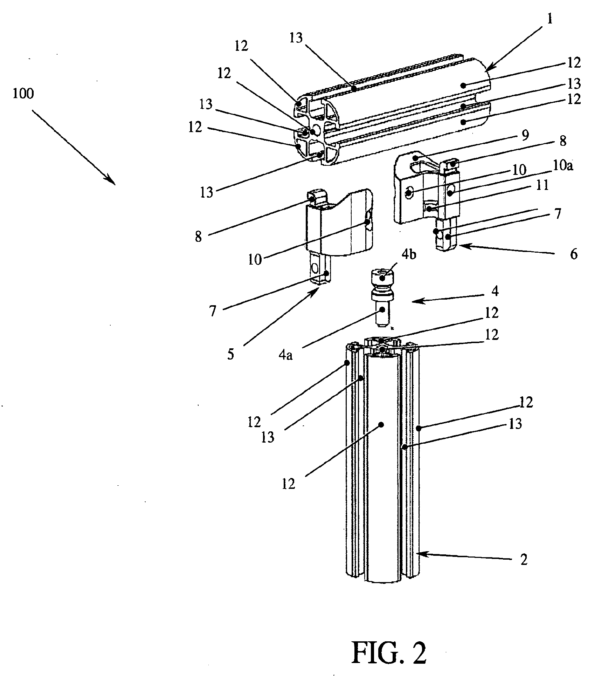

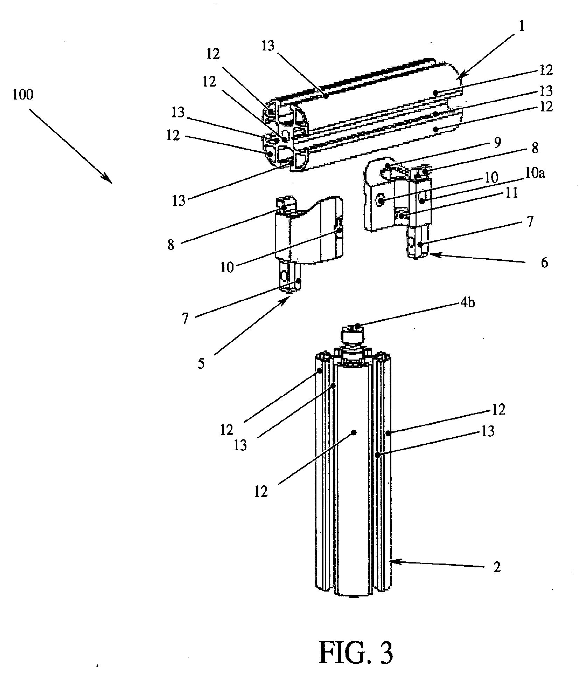

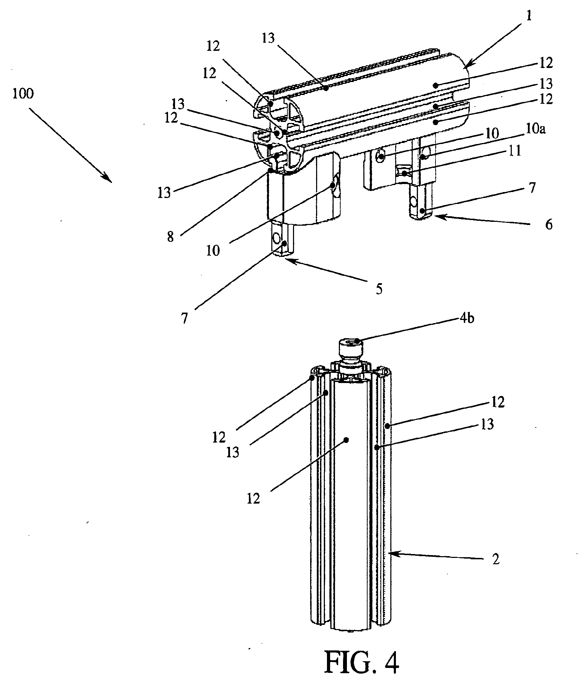

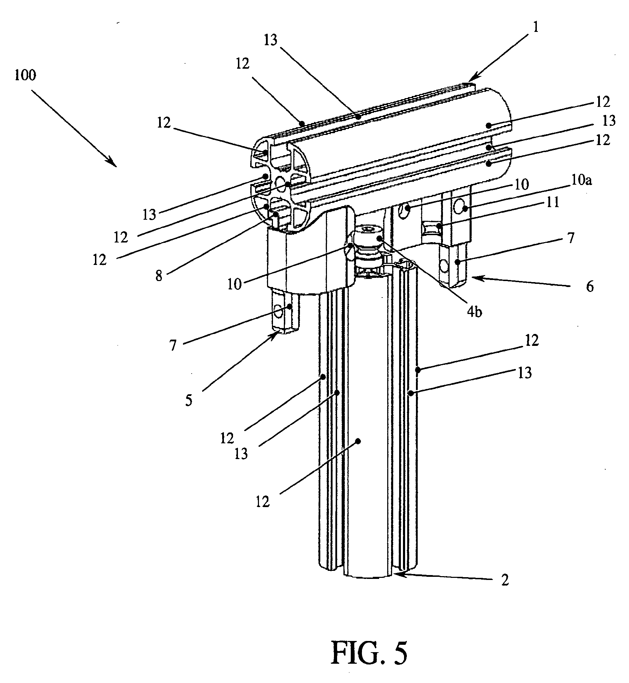

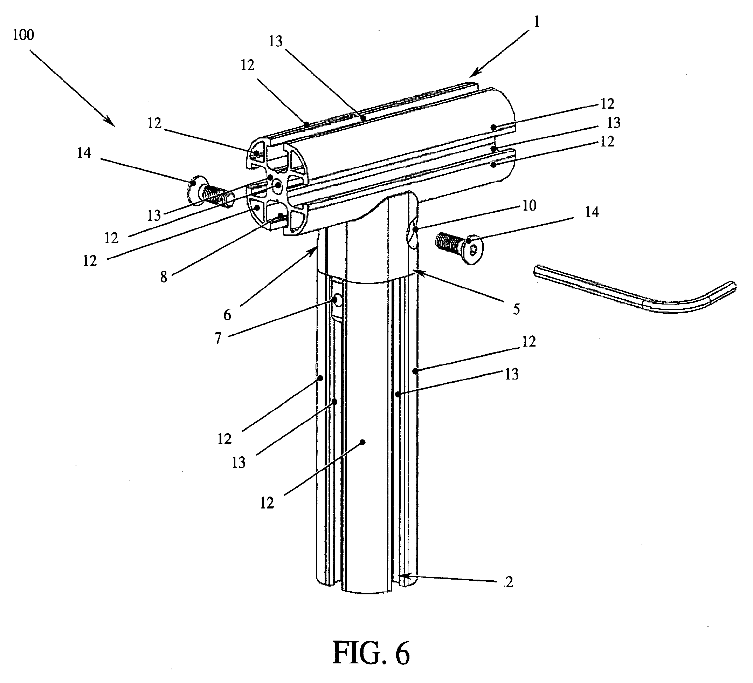

Through the system 100 according to the present invention like the previously described one, it is thereby possible to quickly and easily make a connection, for example of the right angle or "T" type, for at least two profiled elements 1, 2 by proceeding, for example, as follows:
- right-angle arranging the first profiled element 1 with respect to the second profiled element 2 (as shown, for example, in Figure 2);
- connecting the fastening pin 4 of the second profiled element 2, for example by inserting the first portion 4a along the axis of symmetry (preferably inside a longitudinal hollow element 12), centred on the end surface of the second profiled element 2 (as shown, for example, in Figure 3);
- inserting the adhesion profile 8 of each of the half-shells 5, 6 inside the groove 13 of the first profiled element 1 (as shown, for example, in Figure 4);
- moving the second profiled element 2 equipped with the fastening means 4, along its own axis of symmetry, next to the first profiled element 1, in the centre-distance area of the half-shells 5, 6 (as shown, for example, in Figure 5);
- sliding the half-shells 5, 6 along the axis of symmetry of the first profiled element 1;
- possibly connecting the appendix 7 of each of the half-shells 5, 6, to a respective groove 13 of the second profiled element;
- approaching the first half-shell 5 to the second half-shell 6 housing and tightening the connection head 4a of the fastening pin 4 in the seat 11 of each of the half-shells 5, 6 (as shown, for example, in Figure 6);
- overlapping the first hole 10 of the first half-shell 5 with the second hole 10 of the second half-shell 6, and vice versa (as shown, for example, in Figure 6); and
- inserting and screwing the blocking screw 14 in the hole 10 (as shown, for example, in Figure 6).

From above, it is clear how the half-shells 5, 6 of the composable jaw and the fastening pin 4, once assembled, are adapted to form at least one single connection block between the profiled elements 1, 2.

## Claims

1. Assembling system (100) of sections for the connection of at least one first profiled element (1) and of at least one second profiled element (2), each of said profiled elements (1, 2) being equipped with at least one longitudinal groove (13), said system (100) comprising at least one fastening pin (4) comprising a first portion (4a) adapted to be connected to said second profiled element (2) and at least one second portion, going out of an end surface of said second profiled element (2), equipped with at least one connection head (4b), and comprising at least one connection element equipped with first connection means to at least one groove (13) of said first profiled element (1) and of second connection means to said connection head (4b) of said fastening pin (4), **characterized in that** said connection element comprises at least one composable jaw composed of at least one first half-shell (5) and at least one second half-shell (6), which are mutually complementary, each of said half-shells (5, 6) being equipped with said first connection means to said at least one groove (13) of said first profiled element (1) and with said second connection means to said connection head (4b) of said fastening pin (4), said first connection means comprising at least one adhesion profile (8) adapted to be inserted into said groove (13) of said first profiled element (1).

2. System (100) according to claim 1, **characterized in that** said second connection means comprise at least one seat (11) arranged on an internal surface of a respective half-shell (5, 6), said seat (11) being adapted to house therein at least one portion of said connection head (4b) of said fastening pin (4).

3. System (100) according to any one of the previous claims, **characterized in that** at least one lower end of each of said half-shells (5, 6) is equipped with at least one appendix (8) adapted to be connected to said groove (13) of said second profiled element (2).

4. System (100) according to the previous claim, **characterized in that** said first portion (4a) is adapted to be inserted along at least one axis of symmetry of said second profiled element (2).

5. System (100) according to the previous claim, **characterized in that** each of said half-shells (5, 6) is equipped with at least one upper surface (9) and at least one lower surface adapted to be respectively matched with at least one portion of external surface of said first profiled element (1) and with at least one portion of external surface of at least one upper end of said second profiled element (2).

6. System (100) according to any one of the previous claims, **characterized in that** each of said half-shells (5, 6) is further equipped, on at least one portion of external surface, with at least one first hole (10) adapted to house at least one blocking screw (14), and with at least one second hole (10a) occupying, on said portion of external surface, at least one diametrically opposite position to said first hole (10).

7. System (100) according to the previous claim, **characterized in that** said first hole (10) of said first half-shell (5) is adapted to be overlapped with said second hole (10a) of said second half-shell (6), and simultaneously that said first hole (10) of said second half-shell (6) is adapted to be overlapped with said second hole (10a) of said first half-shell (5).

8. System (100) according to claim 1, **characterized in that** said half-shells (5, 6) and said fastening pin (4) are adapted to form at least one single connection block between said profiled elements (1, 2).

## Patentansprüche

1. Montagesystem (100) für Profile zur Verbindung von mindestens einem Profilelement (1) und mindestens einem zweiten Profilelement (2), jedes dieser genannten Profilelemente (1, 2) ist mit mindestens einer Längsrille (13) ausgestattet, das genannte System (100) schließt mindestens einen Befestigungsbolzen (4) ein, der einen ersten Teil (4a) enthält, welcher dazu dient, mit dem genannten zweiten Profilelement (2) und mit mindestens einem zweiten Teil verbunden zu werden, der aus einer Endoberfläche des genannten zweiten Profilelements (2) austritt, das mit mindestens einem Verbindungskopf (4b) ausgestattet ist und mindestens ein Verbindungselement enthält, das mit ersten Verbindungsvorrichtungen mit mindestens einer Rille (13) des genannten ersten Profilelements (1) und mit zweiten Verbindungsvorrichtungen mit dem genannten Verbindungskopf (4b) des genannten Befestigungsbolzens (4) ausgestattet ist, der **dadurch gekennzeichnet ist, dass** das genannte Verbindungselement mindestens eine zusammensetzbare Spannbacke enthält, die aus mindestens einer Halbschale (5) und mindestens einer zweiten Halbschale (6) besteht, die sich gegenseitig ergänzen, jede der genannten Halbschalen (5, 6) ist mit den genannten ersten Verbindungsvorrichtungen mit der genannten mindestens einer Rille (13) des genannten ersten Profilelements (1) und den genannten zweiten Verbindungselementen mit dem genannten Verbindungskopf (4b) des genannten Befestigungsbolzens (4) ausgestattet, die genannten ersten Verbindungsvorrichtungen schließen mindestens ein Halteprofil (8) ein, das dazu dient, in eine genannte Rille (13) des genannten ersten Profilelements (1) eingesetzt zu werden.

2. System (100) gemäß Patentanspruch 1, das **dadurch gekennzeichnet ist, dass** die genannten zweiten Verbindungsvorrichtungen mindestens eine Aufnahme (11) enthalten, die an einer Innenfläche einer entsprechenden genannten Halbschale (5, 6) angebracht ist, die genannte Aufnahme (11) dient dazu, in ihrem Inneren mindestens einen Teil des genannten Verbindungskopfes (4b) des genannten Befestigungsbolzens (4) aufzunehmen.

3. System (100) gemäß einem beliebigen der vorhergehenden Patentansprüche, das **dadurch gekennzeichnet ist, dass** mindestens ein unteres Ende jeder der genannten Halbschalen (5, 6) mit mindestens einem Fortsatz (8) ausgestattet ist, der dazu dient, sich mit einer genannten Rille (13) des genannten zweiten Profilelements (2) zu verbinden.

4. System (100) gemäß dem vorhergehenden Patentanspruch, das **dadurch gekennzeichnet ist, dass** der genannte erste Teil (4a) dazu dient, längs mindestens einer Symmetrieachse des genannten zweiten Profilelements (2) eingesetzt zu werden.

5. System (100) gemäß dem vorhergehenden Patentanspruch, das **dadurch gekennzeichnet ist, dass** jede der genannten Halbschalten (5, 6) mit mindestens einer oberen Oberfläche (9) und mindestens einer unteren Oberfläche ausgestattet ist, die dazu dienen, jeweils mit mindestens einem Teil der Außenfläche des genannten ersten Profilelements (1) und mit mindestens einem Teil der Außenfläche des genannten zweiten Profilelements (2) übereinzustimmen.

6. System (100) gemäß einem beliebigen der vorhergehenden Patentansprüche, das **dadurch gekennzeichnet ist, dass** jede der genannten Halbschalen (5, 6) außerdem an mindestens einem Teil der Außenfläche mit mindestens einer ersten Bohrung (10), die für die Aufnahme von mindestens einer Blockierschraube (14) dient, und mit mindestens einer zweiten Bohrung (10a), die am genannten Teil der Außenfläche mindestens eine diametral entgegen gesetzte Position zur genannten ersten Bohrung (10) besetzt, ausgestattet ist.

7. System (100) gemäß dem vorhergehenden Patentanspruch, das **dadurch gekennzeichnet ist, dass** die genannte erste Bohrung (10) der genannten ersten Halbschale (5) dazu dient, die genannte zweite Bohrung (10a) der genannten zweiten Halbschale (6) zu überlagern, und gleichzeitig, dass die genannte erste Bohrung (10) der genannten zweiten Halbschale (6) dazu dient, die genannte zweite Bohrung (10a) der genannten ersten Halbschale (5) zu überlagern.

8. System (100) gemäß Patentanspruch 1, das **dadurch gekennzeichnet ist, dass** die genannten Halbschalen (5, 6) und der genannte Befestigungsbolzen (4) dazu dienen, zusammen mindestens einen einzigen Verbindungsblock zwischen den genannten Profilelementen (1, 2) zu bilden.

## Revendications

1. Système (100) d'assemblage de profilés pour le raccordement au moins d'un premier élément profilé (1) et au moins d'un second élément profilé (2) dont chacun est doté au moins d'une rainure longitudinale (13); le système (100) comprend au moins un goujon de fixation (4) doté d'une première portion (4a) apte à être raccordée au second élément profilé (2) et au moins une seconde portion, sortant d'une surface d'extrémité du second élément profilé (2), dotée au moins d'une tête de raccordement (4b), et comprenant au moins un élément de raccordement doté de premiers moyens de raccordement à une rainure (13) du premier élément profilé (1) et de seconds moyens de raccordement à la tête de raccordement (4b) du goujon de fixation (4), **caractérisé en ce que** l'élément de raccordement comprend au moins une mâchoire modulaire composée d'une première demi-coquille (5) et d'une seconde demi-coquille (6) réciproquement complémentaires ; chaque demi-coquille (5, 6) est dotée de premiers moyens de raccordement à la rainure (13) du premier élément profilé (1) et de seconds moyens de raccordement à la tête de raccordement (4b) du goujon de fixation (4) ; les premiers moyens de raccordement comprennent au moins un profilé d'accrochage (8) apte à être inséré dans la rainure (13) du premier élément profilé (1).

2. Système (100), selon la revendication 1, **caractérisé en ce que** les seconds moyens de raccordement comprennent au moins un logement (11) situé sur une surface interne de la demi-coquille relative (5, 6) ; ce logement (11) est en mesure d'accueillir au moins une portion de la tête de raccordement (4b) du pivot de fixation (4).

3. Système (100), selon l'une des revendications précédentes, **caractérisé en ce qu'**au moins une extrémité inférieure de chaque demi-coquille (5, 6) est dotée au moins d'un appendice (8) apte à se raccorder à la rainure (13) du second élément profilé (2).

4. Système (100), selon la revendication précédente, **caractérisé en ce que** la première portion (4a) est apte à être insérée le long d'un axe de symétrie au moins du second élément profilé (2).

5. Système (100), selon la revendication précédente, **caractérisé en ce que** chaque demi-coquille (5, 6) est dotée au moins d'une surface supérieure (9) et au moins d'une surface inférieure aptes à coïncider respectivement avec au moins une portion de surface externe du premier élément profilé (1) et au moins une portion de surface externe d'une extrémité supérieure du second élément profilé (2).

6. Système (100), selon l'une des revendications précédentes, **caractérisé en ce que** chaque demi-coquille (5, 6) est par ailleurs dotée, sur une portion de surface externe, d'un premier trou (10) apte à accueillir au moins une vis de blocage (14), et un second trou (10a) occupant, sur cette portion de surface externe, une positon diamétralement opposée à celle du premier trou (10).

7. Système (100), selon la revendication précédente, **caractérisé en ce que** le premier trou (10) de la première demi-coquille (5) est apte à se superposer au second trou (10a) de la deuxième demi-coquille (6), et simultanément **en ce que** le premier trou (10) de la deuxième demi-coquille (6) est apte à se superposer au second trou (10a) de la première demi-coquille (5).

8. Système (100), selon la revendication 1, **caractérisé en ce que** les demi-coquilles (5, 6) et le goujon de fixation (4) sont aptes à former au moins un bloc unique de raccordement entre les éléments profilés (1, 2).
